# EUROPEAN PATENT SPECIFICATION

(11) **EP 1 466 810 B1**
(45) Date of publication and mention of the grant of the patent: **16.07.2008**
(21) Application number: 04076063.9
(22) Date of filing: 05.04.2004
(51) Int. Cl.: B62B 7/08

(54) **Stroller**
Schiebewagen
Poussette

(30) Priority: 10.04.2003 NL 1023140; 26.02.2004 NL 1025569
(43) Date of publication of application: 13.10.2004
(73) Proprietor: Maxi Miliaan B.V., 5704 RD Helmond (NL)
(72) Inventor: Siewertsen, Adriaan, 5961 MD Son en Breugel (NL); Jacobs, Imre Peter, 3572 ET Utrecht (NL)
(74) Representative: Valkonet, Rutger

(56) References cited:
- EP-A- 1 346 900
- EP-A- 1 366 968
- DE-A- 3 839 660
- US-A- 5 558 357
- US-A- 5 863 061
- US-B2- 6 533 309

## Description

The invention relates to a stroller being foldable from an erect position to a collapsed position, and vice versa, which stroller comprising at least one front wheel and at least one rear wheel, which wheels are interconnected by means of a collapsible folding mechanism, which stroller furthermore comprises a rod fitted with a handle, which is connected to the folding mechanism, the folding mechanism comprises a linkage system having at least one central joint and at least one rod connected via a support to the front wheel, which central joint being slidable over the rod away from and to support during the erection and collapsion of the stroller,

With such a stroller, which is known from US patent US-A-6,563,309, the folding mechanism comprises a shaft pipe extending perpendicular to rods of a the central joint. An H-shaped frame is slidable along said rods. The shaft pipe is pivotable around its axis with respect to the central joint and provided at the ends with the rear wheels. Connected to the shaft pipe is a rear frame which at the ends remote from the shaft pipe is coupled via joints to handle push pipes as well as to a front frame 1. To erect the stroller, the front frame needs to be connected to front end forks of the H-shaped frame.

A drawback of said known stroller is that this assembling operation is relatively complicated and that the stroller is still comparatively large in a collapsed position. This is undesirable when the stroller is to be transported, for example by means of a car or a bicycle.

The object of the invention is to provide a stroller which is relatively compact in collapsed position, and which can moreover be moved from the collapsed position to the erect position, and vice versa, in a relatively simple manner.

This object is accomplished with the stroller according to the invention in that the linkage system is cross shaped, which cross shaped linkage system comprises a number of rods each extending from said cental joint and with one end pivotally connected to the central joint, wherein the ends of rods remote from said central joint are connected to said rear wheel and to the push rod fitted with the handle, respectively.

The stroller can easily be folded from the erect position to the collapsed position, and vice versa, by moving the central joint and the support connected to the front wheel relative to each other, whereby the rods pivot with respect to the central joint, the rear wheel and the push rod. In addition, a compact stroller (in collapsed position) is obtained in this manner.

The slidably interconnected rod and central joint ensure a strong telescopic connection between a front side and the rear side of the stroller.

One embodiment of the stroller is characterized in that the central joint comprises a bushing in which the rod connected to the front wheel is slidably accommodated.

In this way the rod connected to the front wheel can be supported in the bushing in a simple manner, whilst the rods extending from said central joint can be connected to the bushing in a simple manner. The rods of the cross-shaped linkage system may be rigidly as well as pivotally interconnected. When a rigid connection is used, the stroller can be collapsed in two dimensions, whilst in the case of a pivoted connection the stroller can be collapsed in three dimensions.

Another embodiment of the stroller is characterized in that the folding mechanism comprises a gas spring extending parallel to the rod that is connected to the front wheel, wherein one end of the gas spring is connected to the rod that is connected to the front wheel and the other end of the gas spring is connected to the central joint.

The gas spring makes it easy to move the folding mechanism to the erect position and maintain it in said position. When the folding mechanism is to be collapsed, the central joint must be moved in the direction of the front wheel against the spring force of the gas spring. The advantage of a gas spring is that a relatively large spring force can be realised with a comparatively limited volume. Furthermore, the dampening action of the gas spring makes it possible to move the stroller from the collapsed position to the erect position in a gradual manner. The compact construction of gas springs furthermore makes it comparatively easy to accommodate the gas spring in a hollow rod of the folding mechanism.

Another embodiment of the stroller is characterized in that the cross-shaped linkage system comprises at least four rods, wherein two rods have a rear wheel mounted thereto at the end remote from the central joint, whilst two other rods are connected remote from the central joint to the push rod fitted with a handle at the end.

In this way a relatively simple and symmetrical construction of the cross-shaped linkage system is realised.

Another embodiment of the stroller is characterized in that rods of the cross-shaped linkage system are pivotally connected to the central joint.

Since the rods are pivotally connected to the central joint, the stroller can be collapsed in three dimensions, with the rear wheels being moved towards each other upon said collapsing. As a result, a comparatively very compact stroller (in collapsed position) is obtained.

Yet another embodiment of the stroller is characterized in that the folding mechanism furthermore comprises two intermediate rods that extend between ends of two rods forming part of the cross-shaped linkage system and the support that is connected to the front wheel.

As a result of the presence of said additional intermediate rods, a simple but nevertheless stable stroller is obtained.

The invention will be explained hereinafter with reference to the drawings, in which:
Figs. 1A-1C are a side view, a perspective view and a rear view, respectively, of a first embodiment of a stroller according to the invention, showing the stroller in an erect position thereof;
Figs. 2A and 2B are a side view and a perspective view of the stroller that is shown in Figs. 1A-1C, showing the stroller in a partially collapsed position;
Figs. 3A and 3B are a side view and a perspective view of the stroller that is shown in Figs. 1A-1C, showing the stroller in a further stage of being collapsed;
Figs. 4A and 4B are a side view and a perspective view of the stroller that is shown in Figs. 1A-1C, showing the stroller in a fully collapsed position;
Figs. 5A and 5B are a side view and a perspective view of a second embodiment of a stroller according to the invention in an erect position;
Figs. 6A-6C are a perspective view, a side view and a rear view of the stroller that is shown in Figs. 5A-5B, in which the stroller is shown in an erect position thereof, without an infant seat being present;
Figs. 7A-10B are perspective views and side views of the stroller that is shown in Figs. 6A-6B, showing the stroller in increasingly further stages of being collapsed;
Fig. 11 is a side view of a part of the stroller that is shown in Figs. 5A-10B;

In the figures, like parts are indicated by the same numerals.

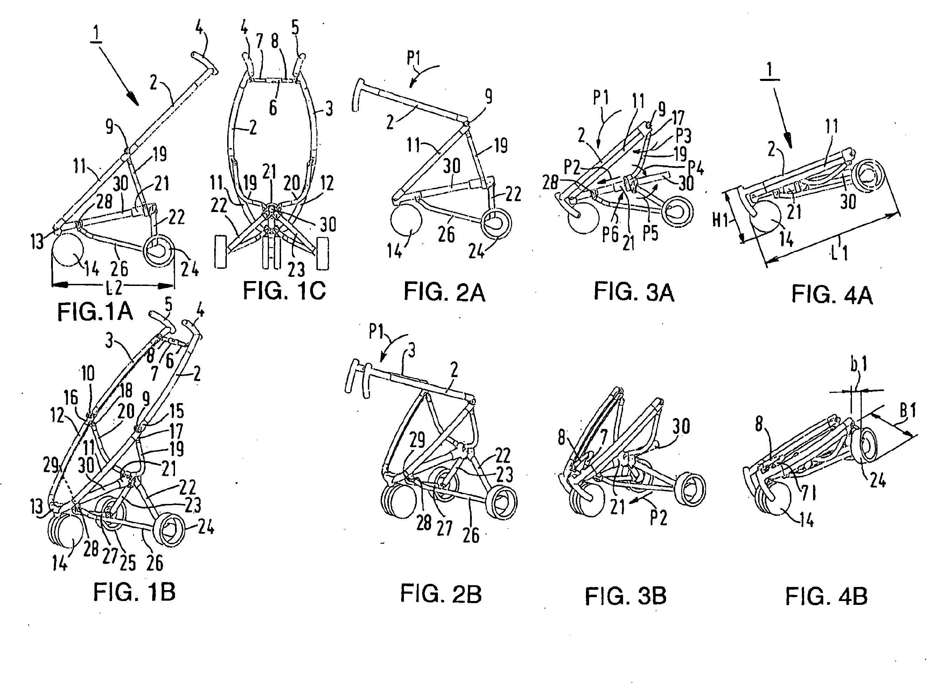

Figs. 1A-1C are a side view, a perspective view and a rear view of a first embodiment of a stroller 1 according to the invention. For reasons of clarity of the drawing, the stroller 1 is not provided with a seat for an infant to be transported by means of the stroller. The stroller 1 comprises two push rods 2, 3 extending parallel to each other, which are fitted with a handle 4, 5 at one end. Two pivotally interconnected rods 7, 8, which can be interlocked by means of a locking element 6, extend between the handles 4, 5. At their ends remote from the handles 4, 5, the push rods 2, 3 are pivotally connected to rods 11, 12 via hinges 9, 10. At their ends remote from the push rods 2, 3, the rods 11, 12 are interconnected by means of a connecting piece 13, to which a front wheel 14 is pivotally connected about a vertically extending axis. The hinges 9, 10 are each connected to a connecting element 15, 16, which connecting elements are furthermore provided with hinges 17, 18, to which ends of J-shaped rods 19, 20 are connected. The J-shaped rods 19, 20 are pivotally connected at their ends remote from the hinges 17, 18 to a bushing 21 forming a central joint. Two wheel supporting rods 22, 23 are pivotally connected to the bushing 21. Each wheel supporting rod 22, 23 has a rear wheel 24, 25 mounted thereto at the end remote from the bushing 21, which rear wheels are rotatable about a horizontally extending axis. The wheel supporting rods 22, 23 are furthermore pivotally connected to intermediate rods 26, 27 at their ends remote from the bushing 21, which intermediate rods are pivotally attached to the rods 11, 12 at their ends 28, 29 remote from the rear wheels 24, 25, near the connecting piece 13. The connecting piece 13, which is positioned near the front wheel 14, is connected to an end of a rod 30 which is slidably accommodated in the bushing 21 with an end remote from the connecting piece 13. The J-shaped rods 19, 20 and the wheel supporting rods 22, 23 together form a cross-shaped linkage system, the rods of which are pivotally connected to a central joint formed by the bushing 21.

Figs. 1A-1C show the stroller 1 in the fully erect position. Figs. 4A and 4B show the stroller 1 in the fully collapsed position. Said collapsed position is achieved by disconnecting the element 6, starting from the erect position that is shown in Figs. 1A-1C, as a result of which the rods 7, 8 positioned on either side of the element 6 can pivot with respect to each other. Subsequently, a user pivots the push rods 2, 3 in the direction indicated by the arrow P1, so that the push rods 2, 3 will be positioned parallel to the rods 11, 12 (Figs. 3A, 3B).

Following that, the bushing 21 is moved over the rod 30 in the direction indicated by the arrow P2 towards the connecting element 13 that is connected to the front wheel 14. As a result, the J-shaped rods 19, 20 pivot about the hinges 17, 18 in the direction indicated by the arrow P3 and also in the direction indicated by the arrow P4 with respect to the bushing 21. At the same time, the wheel supporting rods 22, 23 pivot with respect to the bushing 21 in the direction indicated by the arrow P5. The intermediate rods 25, 26 pivot about the hinges 28, 29 in the direction indicated by the arrow P6. The bushing 21 is moved over the rod 30 in the direction indicated by the arrow P2 until the stroller 1 has reached the collapsed position that is shown in Figs. 4A and 4B. The dimension L1 of the collapsed stroller 1 is practically the same as the dimension L2 of the stroller 1 in the erect position, said dimension L2 being the distance between the front side of the front wheel 14 and the rear side of the rear wheel 24. In this case L2 is e.g. 58 cm, whilst L1 is 65 cm. The height H1 (e.g. 25 cm) of the collapsed stroller 1 is slightly greater than the diameter (e.g. 15 cm) of the front wheel 14, whilst the width B1 (e.g. 22 cm) of the collapsed stroller 1 is about three times the width b1 (e.g. 6 cm) of the rear wheels 24.

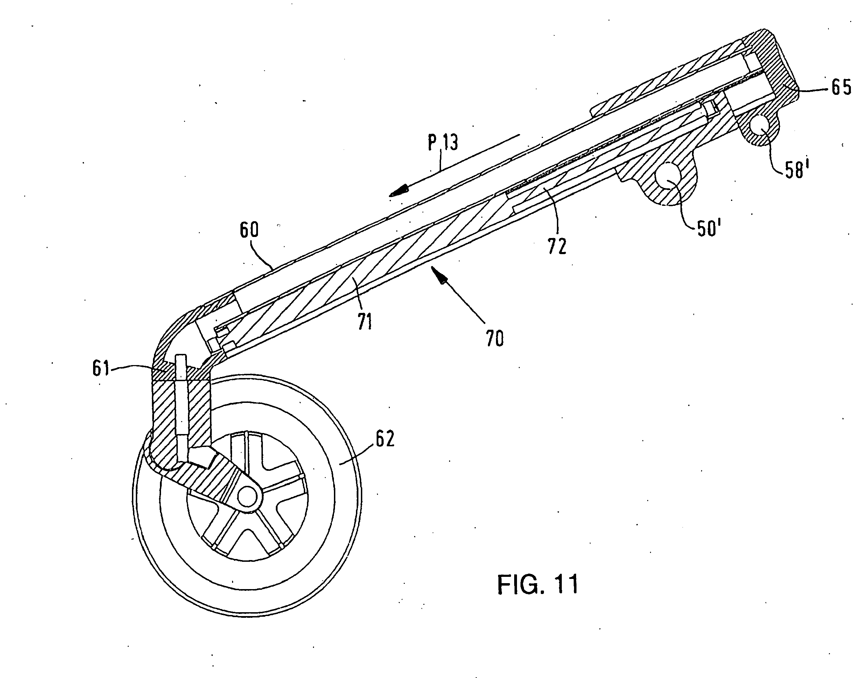

Preferably, a spring, a gas spring in a preferred embodiment, is accommodated in the rod 30, which spring is connected to the connecting element 13 with one end and to the bushing 21 with the other end. The gas spring will be explained in more detail yet with reference to Fig. 11.

The stroller 1 is provided with locking means at suitable positions, which prevent undesirable collapsing of the stroller 1 during use. Only a frame of the stroller 1 is shown in Figs. 1A-4B. A seat for an infant may be mounted in the frame by means that are known per se. This seat may be a non-folding bucket-type seat, in which case the seat must be removed from the frame prior to the stroller 1 being collapsed. This seat may also be made of a cloth, for example, which is secured to the rods 2, 3, 11, 12 and which may remain attached to the frame upon collapsing of the stroller 1.

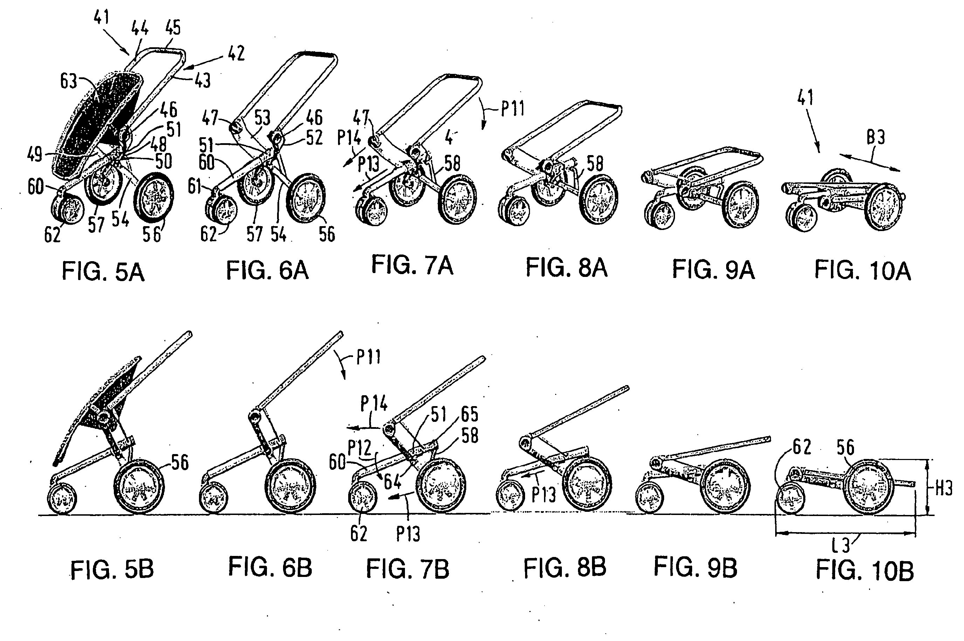

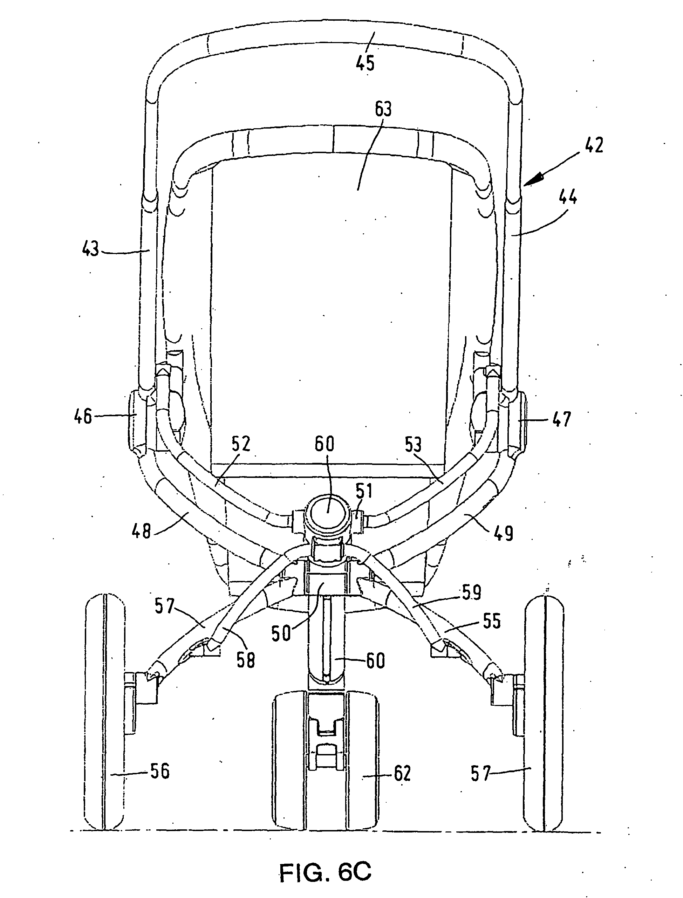

Figs. 5A-10B show a second embodiment of a stroller 41 according to the invention, which is provided with a U-shaped bracket 42, which comprises two push rods 43, 44 extending parallel to each other as well as a handle 45 connecting the push rods 43, 44. At their ends remote from the handle 45, the push rods 43, 44 are pivotally connected, via hinges 46, 47, respectively, to two J-shaped rods 48, 49 (see Fig. 6C). The J-shaped rods 48, 49 are rigidly connected to a connecting piece 50 at their ends remote from the hinges 46, 47. The connecting piece 50 is pivotally connected to a bushing 51 forming a central joint. Auxiliary rods 52, 53 extend between the push rods 43, 44 and the bushing 51, which auxiliary rods are pivotally attached both to the push rods 43, 44 and to the bushing 51. The auxiliary rods 52, 53 extend substantially parallel to the J-shaped rods 48, 49, forming a parallelogram therewith. Two wheel supporting rods 54, 55 are furthermore rigidly attached to the connecting element 50. At their ends remote from the connecting element 50, the wheel supporting rods 54, 55 have rear wheels 56, 57 mounted thereto, which wheels are rotatable about a horizontal axis. Auxiliary rods 58, 59 extend between the wheel supporting rods 54, 55 and one end of a rod 60 accommodated in the bushing 51, which auxiliary rods are pivotally connected to the end 65 as well as to the wheel supporting rods 54, 55. The rod 60 is slidably accommodated in the bushing 51. At an end remote from the bushing 51, the rod 60 is provided with a wheel suspension element 61 and with a front wheel 62 that is pivotally connected thereto. The front wheel 62 is furthermore connected to the element 61, being rotatable about a horizontal axis. The stroller 41 is furthermore provided with a seat 63 for an infant, which seat 63 is preferably detachably connected to the stroller 41 near the hinges 46, 47.

The stroller 41 can be collapsed from the erect position that is shown in Figs. 5A and 5B to the collapsed position that is shown in Figs. 10A-10B. If desired, the seat 63 can be removed from the stroller 41. It is also possible not to remove the seat 63, however. To collapse the stroller 41, unlocking devices (not shown) in the hinges 46, 47 are unlocked, after which the hinges 46, 47 are moved forward in the direction indicated by the arrow P14, with the U-shaped bracket 42 being pivoted about the hinges 46, 47 in the direction indicated by the arrow P11. As a result of the parallelogram-shaped arrangement of the rods 48, 52 and 49, 53, respectively, a rigid cross-shaped linkage system formed by the rods 48, 49, 54, 55 is tilted about the axis 64, in the direction indicated by the arrow P12, with respect to the bushing 51. Because the wheel supporting rods 54, 55 are connected to the end 65 of the rod 60 via the auxiliary rods 58, 59, the pivoting movement of the cross-shaped linkage system in the direction indicated by the arrow P12 will cause the bushing 51 to move in the direction indicated by the arrow P13 over the rod 60, towards the front wheel 62. Thus the stroller 41 will successively take up the positions shown in Figs. 7A-7B; Figs. 8A-8B; Figs. 9A-9B, and finally the collapsed position that is shown in Figs. 10A-10B. In this position, the collapsed stroller 41 has a length L3 which is slightly greater than the distance between the front side of the front wheel 62 and the rear side of the rear wheels 56, a height H3 equal to the diameter of the rear wheel 56 and a width B3 equal to the distance between the rear wheels 56, 57. The above dimensions are the dimensions that the stroller 41 will have when the seat 63 is removed. When the seat is present, the dimensions of the collapsed stroller 41 may be slightly larger. The stroller 41, too, is preferably provided with a gas spring accommodated in the rod 60, which is connected to the rod 60 near the element 61 with one end and to the bushing 51 with the other end.

If the push rods 43, 44 of the U-shaped bracket 42 are constructed as telescopic tubes, it is possible to telescope the U-shaped bracket 42 in such a manner that the length L3 equals the distance from the front wheel to the rear wheel in the collapsed position. If the wheels are removable the height H3 and the length L3 will be even smaller.

Collapsing of the stroller 41 comprises a two-dimensional movement, as it were, whereas collapsing of the stroller 1 comprises a three-dimensional movement, because also the rear wheels 23, 24 and the handles 4, 5 and the rods connected thereto are moved towards each other.

Fig. 11 shows a part of the stroller 41 that is shown in Figs. 5A-10B, in which a gas spring 70 is accommodated in a rod 60. The gas spring 70 comprises a cylinder 71, which is connected to the wheel suspension element 61, and a piston rod 72 that is movable in the direction indicated by the arrow P13 and in the opposite direction within the cylinder 71, which piston rod is connected to the bushing 51 with an end remote from the cylinder 71. A pivot point 50' for pivoted attachment of the connecting element 50 is shown to be present on the bushing 51. Present at the end of the rod 60 is the end 65, which end comprises a pivot point 58', to which the auxiliary rod 58 is pivotally attached.

The rod connected to the front wheel may be hollow, in which case the central joint is provided with a pin that can be moved into the hollow rod.

It is also possible to fit the gas spring at another location in the stroller, in which case the gas spring supports the unfolding of the stroller, i.e. the movement of the folding mechanism to the erect position is supported by the gas spring. The advantage of using a gas spring is that unfolding can take place much more gradually than in the situation in which a coil spring is used.

Single wheels or double wheels (see front wheel 14, rear wheel 53) may be used.

It is also possible to position the front wheel at the rear side and the rear wheels at the front side, seen in the direction of movement.

Preferably, undesirable unfolding or collapsing from the collapsed position or from the erect position, respectively, is prevented by locking means that are known per se.

If desired, a collapsible shopping basket may be placed in the empty space bounded by the rods 11, 12 and the intermediate rods 26, 27.

It is also possible to lock/unlock the stroller to/from a mechanism other than the element 6.

## Claims

1. A stroller (1, 41) being foldable from an erect position to a collapsed position, and vice versa, which stroller (1, 41) comprising at least one front wheel (14, 62) and at least one rear wheel (24, 25, 56, 57), which wheels are interconnected by means of a collapsible folding mechanism, which stroller furthermore comprises a rod (2, 3, 43, 44) fitted with a handle (4, 5, 45), which is connected to the folding mechanism, the folding mechanism comprises a linkage system having at least one central joint and at least one rod (30, 60) connected via a support (13, 61) to the front wheel (14, 62), which central joint being slidable over the rod (30, 60) away from and to the support (13, 61) during the erection and collapsion of the stroller (1, 41), **characterized in that** the linkage system is cross shaped, which cross shaped linkage system comprises a number of rods (19, 20, 22, 23; 48, 49, 54, 55) each extending from said cental joint and with one end pivotally connected to the central joint, wherein the ends of rods (19, 20, 22, 23; 48, 49, 54, 55) remote from said central joint are connected to said rear wheel (24, 25, 56, 57) and to the push rod (2, 3, 43, 44) fitted with the handle (4, 5, 45), respectively.

2. A stroller (1, 41) according to claim 1, **characterized in that** the central joint comprises a bushing (21, 51) in which the rod (30, 60) connected to the front wheel (14, 62) is slidably accommodated.

3. A stroller (1, 41) according to claim 1, 2, **characterized in that** the folding mechanism comprises a gas spring (70) extending parallel to the rod (30, 60) that is connected to the front wheel (14, 62), wherein one end of the gas spring (70) is connected to the rod (30, 60) that is connected to the front wheel (14, 62) and the other end of the gas spring (70) is connected to the central joint.

4. A stroller (1, 41) according to any one of the preceding claims, **characterized in that** the cross shaped linkage system comprises at least four rods (19, 20, 22, 23; 48, 49, 54, 55), wherein two rods (22, 23; 54, 55) have a rear wheel (24, 25; 56, 57) mounted thereto at the end remote from the central joint, whilst two other rods (19, 20; 48, 49) are connected remote from the central joint to the push rod (23; 43, 44) fitted with a handle (4, 5; 45) at the end.

5. A stroller (1, 41) according to any one of the preceding claims, **characterized in that** rods (19, 20, 22, 23; 48, 49, 54, 55) of the cross-shaped linkage system are pivotally connected to the central joint.

6. A stroller (41) according to any one of the preceding claims, **characterized in that** the rods (48, 49, 54, 55) of the cross-shaped linkage system are rigidly interconnected.

7. A stroller (1) according to any one of the preceding claims, **characterized in that** the folding mechanism furthermore comprises two intermediate rods (26, 27) that extend between ends of two rods (22, 23) forming part of the cross-shaped linkage system and the support (13) connected to the front wheel (14).

8. A stroller (1) according to any one of the preceding claims, **characterized in that** two rods (19, 20) forming part of the cross-shaped linkage system each comprise, at the end remote from the central joint, the push rod (2, 3) fitted with the handle (4, 5), as well as a rod (11, 12) connected to the front wheel (14).

9. A stroller (41) according to any one of the preceding claims, **characterized in that** the cross-shaped linkage system comprises at least one auxiliary rod (52, 53) extending between the push rod (43, 44) fitted with the handle (45) and the bushing (51), which auxiliary rod (52, 53) extends substantially parallel to the rod (48, 49) extending from the central portion to the push rod (43, 44).

10. A stroller (41) according to any one of the preceding claims, **characterized in that** the folding mechanism comprises an auxiliary rod (58, 59) which extends between an end of the rod (60) remote from the front wheel (62), which rod (60) is connected with its other end to the front wheel (62) and the rod (54, 55), extending from the central portion and connected to the rear wheel (56, 57).

11. A stroller according to any one of the preceding claims, **characterized in that** the stroller comprises two spaced-apart front wheels, between which the support (13) is positioned, wherein the linkage cross shaped system comprises at least three rods, wherein one rod has said at least one rear wheel mounted thereto at an end remote from the central joint, whilst two other rods are each provided with the push rod fitted with a handle at the ends remote from the central joint.

12. A stroller according to any one of the preceding claims, **characterized in that** the folding mechanism furthermore comprises at least one rod (26, 27) which extends between at least one rear wheel and the support (13) that is connected to at least one front wheel.

## Patentansprüche

1. Schiebewagen (1, 41), der aus einer aufgerichteten in eine zusammengelegte Stellung und umgekehrt faltbar ist, umfassend mindestens ein Vorderrad (14, 62) und mindestens ein Hinterrad (24, 25, 56, 57), wobei diese Räder mittels eines zusammenlegbaren Faltmechanismus miteinander verbunden sind, wobei der Schiebewagen außerdem eine mit einem Handgriff (4, 5, 45) versehene Stange (2, 3, 43, 44) umfasst, die mit dem Faltmechanismus verbunden ist, der Faltmechanismus ein Verbindungssystem mit mindestens einem mittleren Gelenk und mindestens einer über eine Halterung (13, 61) mit dem Vorderrad (14, 62) verbundenen Stange (30, 60) umfasst, wobei das mittlere Gelenk während des Aufrichtens und Zusammenlegens des Schiebewagens (1, 41) über die Stange (30, 60) von der Halterung (13, 61) weg und auf diese zu gleiten kann, **dadurch gekennzeichnet, dass** das Verbindungssystem kreuzförmig ist und dieses kreuzförmige Verbindungssystem eine Anzahl von Stangen (19, 20, 22, 23; 48, 49, 54, 55) umfasst, die sich jeweils vom mittleren Gelenk aus und mit einem Ende schwenkbar mit diesem verbunden erstrecken, wobei die vom mittleren Gelenk entfernten Enden der Stangen (19, 20, 22, 23; 48, 49, 54, 55) mit dem Hinterrad (24, 25, 56, 57) bzw. mit der mit dem Handgriff (4, 5, 45) versehenen Schiebestange (2, 3, 43, 44) verbunden sind.

2. Schiebewagen (1, 41) nach Anspruch 1, **dadurch gekennzeichnet, dass** das mittlere Gelenk eine Hülse (21, 51) umfasst, in der die mit dem Vorderrad (14,62) verbundene Stange (30, 60) gleitfähig aufgenommen ist.

3. Schiebewagen (1, 41) nach Anspruch 1, 2, **dadurch gekennzeichnet, dass** der Faltmechanismus eine Gasfeder (70) umfasst, die sich parallel zu der mit dem Vorderrad (14, 62) verbundenen Stange (30, 60) erstreckt, wobei ein Ende der Gasfeder (70) mit der mit dem Vorderrad (14, 62) verbundenen Stange (30, 60) und das andere Ende der Gasfeder (70) mit dem mittleren Gelenk verbunden ist.

4. Schiebewagen (1, 41) nach einem der vorangehenden Ansprüche, **dadurch gekennzeichnet, dass** das kreuzförmige Verbindungssystem mindestens vier Stangen (19, 20, 22, 23; 48, 49, 54 ,55) umfasst, wobei an zwei Stangen (22, 23; 54, 55) an deren vom mittleren Gelenk entfernten Ende ein Hinterrad (24, 25; 56, 57) angebracht ist, während zwei andere Stangen (19, 20; 48, 49) entfernt vom mittleren Gelenk mit der am Ende mit einem Handgriff (4, 5; 45) versehenen Schiebestange (23; 43, 44) verbunden sind.

5. Schiebewagen (1, 41) nach einem der vorangehenden Ansprüche, **dadurch gekennzeichnet, dass** die Stangen (19, 20, 22, 23; 48, 49, 54, 55) des kreuzförmigen Verbindungssystems schwenkbar mit dem mittleren Gelenk verbunden sind.

6. Schiebewagen (41) nach einem der vorangehenden Ansprüche, **dadurch gekennzeichnet, dass** die Stangen (48, 49, 54, 55) des kreuzförmigen Verbindungssystems starr miteinander verbunden sind.

7. Schiebewagen (1) nach einem der vorangehenden Ansprüche, **dadurch gekennzeichnet, dass** der Faltmechanismus ferner zwei Zwischenstäbe (26, 27) umfasst, die sich zwischen Enden zweier zum kreuzförmigen Verbindungssystem gehörender Stangen (22, 23) und der mit dem Vorderrad (14) verbundenen Halterung (13) erstrecken.

8. Schiebewagen (1) nach einem der vorangehenden Ansprüche, **dadurch gekennzeichnet, dass** zwei zum kreuzförmigen Verbindungssystem gehörende Stangen (19, 20) jeweils an ihrem vom mittleren Gelenk entfernten Ende die mit dem Handgriff (4, 5) versehene Schiebestange (2, 3) sowie eine mit dem Vorderrad (14) verbundene Stange (11, 12) umfassen.

9. Schiebewagen (41) nach einem der vorangehenden Ansprüche, **dadurch gekennzeichnet, dass** das kreuzförmige Verbindungssystem mindestens einen sich zwischen der mit dem Handgriff (45) versehenen Schiebestange (43, 44) und der Hülse (51) erstreckenden Hilfsstab (52, 53) umfasst, wobei sich der Hilfsstab (52, 53) im wesentlichen parallel zur Stange (48, 49) erstreckt, die sich vom Mittenabschnitt zur Schiebestange (43, 44) erstreckt.

10. Schiebewagen (41) nach einem der vorangehenden Ansprüche, **dadurch gekennzeichnet, dass** der Faltmechanismus einen Hilfsstab (58, 59) aufweist, der sich zwischen dem vom Vorderrad (62) entfernten Ende der Stange (60) und der Stange (54, 55), die sich vom Mittenabschnitt erstreckt und mit dem Hinterrad (56, 57) verbunden ist, erstreckt, wobei die Stange (60) mit ihrem anderen Ende mit dem Vorderrad (62) verbunden ist.

11. Schiebewagen nach einem der vorangehenden Ansprüche, **dadurch gekennzeichnet, dass** er zwei zueinander beabstandete Vorderräder umfasst, zwischen denen die Halterung (13) untergebracht ist, wobei das kreuzförmige Verbindungssystem mindestens drei Stangen umfasst, wobei am vom mittleren Gelenk entfernten Ende einer Stange mindestens ein Hinterrad befestigt ist, während an den vom mittleren Gelenk entfernten Enden zweier anderer Stangen jeweils die mit einem Handgriff versehene Schiebestange angebracht ist.

12. Schiebewagen nach einem der vorangehenden Ansprüche, **dadurch gekennzeichnet, dass** der Faltmechanismus ferner mindestens eine Stange (26, 27) umfasst, die sich zwischen mindestens einem Hinterrad und der mit mindestens einem Vorderrad verbundenen Halterung (13) erstreckt.

## Revendications

1. Poussette (1, 41) pliable d'une position dépliée vers une position pliée, et vice versa, laquelle poussette (1, 41) comprenant au moins une roue avant (14, 62) et au moins une roue arrière (24, 25, 56, 57), lesquelles roues sont reliées au moyen d'un mécanisme de pliage pliant, laquelle poussette comprend en outre une tige (2, 3, 43, 44) équipée d'une poignée (4, 5, 45), qui est reliée au mécanisme de pliage, le mécanisme de pliage comprend un système de biellettes ayant au moins un joint central et au moins une tige (30, 60) reliée via un support (13, 61) à la roue avant (14, 62), lequel joint central pouvant coulisser sur la tige (30, 60) en s'approchant et s'éloignant du support (13, 61) pendant le dépliage et le pliage de la poussette (1, 41), **caractérisée en ce que** le système de biellettes est en forme de croix, lequel système de biellettes en forme de croix comprend un certain nombre de tiges (19, 20, 22, 23 ; 48, 49, 54, 55) s'étendant chacune depuis le joint central et avec une extrémité reliée à pivotement au joint central, dans lequel les extrémités des tiges (19, 20, 22, 23 ; 48, 49, 54, 55) à distance dudit joint central sont reliées à ladite roue arrière (24, 25, 56, 57) et à la tige de poussée (2, 3, 43, 44) équipée de la poignée (4, 5, 45), respectivement.

2. Poussette (1, 41) selon la revendication 1, **caractérisée en ce que** le joint central comprend une bague (21, 51) dans laquelle la tige (30, 60) reliée à la roue avant (14, 62) est logée par coulissement.

3. Poussette (1, 41) selon la revendication 1, 2, **caractérisée en ce que** le mécanisme de pliage comprend un ressort à gaz (70) s'étendant parallèle à la tige (30, 60) qui est reliée à la roue avant (14, 62), dans laquelle une extrémité du ressort à gaz (70) est reliée à la tige (30, 60) qui est reliée à la roue avant (14, 62) et l'autre extrémité du ressort à gaz (70) est reliée au joint central.

4. Poussette (1, 41) selon l'une quelconque des revendications précédentes, **caractérisée en ce que** le système de biellettes en forme de croix comprend au moins quatre tiges (19, 20, 22, 23 ; 48, 49, 54, 55), dans laquelle deux tiges (22, 23 ; 54, 55) ont une roue arrière (24, 25, 56, 57) montée dessus à l'extrémité éloignée du joint central, alors que deux autres tiges (19, 20 ; 48, 49) sont reliées à distance du joint central à la tige de poussée (23, 43, 44) équipée d'une poignée (4, 5; 45) à l'extrémité.

5. Poussette (1, 41) selon l'une quelconque des revendications précédentes, **caractérisée en ce que** les tiges (19, 20, 22, 23 ; 48, 49, 54, 55) du système de biellettes en forme de croix sont reliées à pivotement au joint central.

6. Poussette (41) selon l'une quelconque des revendications précédentes, **caractérisée en ce que** les tiges (48, 49, 54, 55) du système de biellettes en forme de croix sont reliées entre elles de manière rigide.

7. Poussette (1) selon l'une quelconque des revendications précédentes, **caractérisée en ce que** le mécanisme de pliage comprend en outre deux tiges intermédiaires (26, 27) qui s'étendent entre les extrémités de deux tige (22, 23) formant partie du système de biellettes en forme de croix et du support (13) relié à la roue avant (14).

8. Poussette (1) selon l'une quelconque des revendications précédentes, **caractérisée en ce que** deux tiges (19, 20) formant partie du système de biellettes en forme de croix comprennent chacune, à l'extrémité à distance du joint central, la tige de poussée (2, 3) équipée de la poignée (4, 5), ainsi qu'une tige (11, 12) reliée à la roue avant (14).

9. Poussette (41) selon l'une quelconque des revendications précédentes, **caractérisée en ce que** le système de biellettes en forme de croix comprend au moins une tige auxiliaire (52, 53) s'étendant entre la tige de poussée (43, 44) équipée de la poignée (45) et de la bague (51), laquelle tige auxiliaire (52, 53) s'étend sensiblement parallèle à la tige (48, 49) s'étendant depuis la partie centrale de la tige de poussée (43, 44).

10. Poussette (41) selon l'une quelconque des revendications précédentes, **caractérisée en ce que** le mécanisme de pliage comprend une tige auxiliaire (58, 59) qui s'étend entre une extrémité de la tige (60) à distance de la roue avant (62), laquelle tige (60) est reliée à son autre extrémité à la roue avant (62) et la tige (54, 55), s'étendant depuis la partie centrale et reliée à la roue arrière (56, 57).

11. Poussette selon l'une quelconque des revendications précédentes, **caractérisée en ce que** la poussette comprend deux roues avant espacées entre elles, entre lesquelles le support (13) est positionné, dans lequel le système de biellettes en forme de croix comprend au moins trois tiges, dans lequel une tige a ladite au moins une roue arrière montée dessus à une extrémité à distance du joint central, alors que deux autres tiges sont chacune munie de la tige de poussée équipée d'une poignée aux extrémité à distance du joint central.

12. Poussette selon l'une quelconque des revendications précédentes, **caractérisée en ce que** le mécanisme de pliage comprend en outre une tige (26, 27) qui s'étend entre au moins une roue arrière et le support (13) qui est relié à au moins une roue avant.
